# EUROPÄISCHE PATENTANMELDUNG

(11) **EP 2 999 095 A2**
(43) Veröffentlichungstag der Anmeldung: **23.03.2016**
(21) Anmeldenummer: 15185794.3
(22) Anmeldetag: 18.09.2015
(51) Int. Cl.: H02K 7/02

(54) **SCHWUNGRADSPEICHER**

(30) Priorität: 19.09.2014 AT 506602014
(71) Anmelder: Traktionssysteme Austria GmbH, 2351 Wiener Neudorf (AT)
(72) Erfinder: NEUDORFER, Harald, 2514 Traiskirchen (AT); MÜLLNER, Florian, 1020 Wien (AT); WALCHER, Markus, 1210 Wien (AT); BADER, Michael, 8041 Graz (AT); BRASSEUR, Georg, 1130 Wien (AT); BUCHROITHNER, Armin, 8042 Graz (AT); SCHWEIGHOFER, Bernhard, 8062 Gschwendt (Kumberg) (AT); WEGLEITER, Hannes, 8041 Graz (AT)
(74) Vertreter: Sonn & Partner Patentanwälte

(57) **Zusammenfassung**

Die Erfindung betrifft einen Schwungradspeicher (1), mit einem Schwungrad (2) und einer einen Rotor (4), einen Stator (5) und ein Gehäuse (6) beinhaltenden elektrischen synchronen Reluktanzmaschine (3), wobei der Rotor (4) durch ein elektromagnetisch aktives Blechpaket (7) gebildet ist. Zur Erzielung eines möglichst kompakten und einfach aufgebauten Schwungradspeichers (1), insbesondere für den Einsatz in Fahrzeugen, die häufigen Brems- und Anfahrmanövern ausgesetzt sind, ist vorgesehen, dass das Schwungrad (2) durch ein an zumindest einer Seite, vorzugsweise beiden Seiten, des elektromagnetisch aktiven Blechpakets (7) des Rotors (4) der elektrischen synchronen Reluktanzmaschine (3) innerhalb des Gehäuses (6) angeordnetes elektromagnetisch passives Blechpaket (8) gebildet ist.

## Beschreibung

Die Erfindung betrifft einen Schwungradspeicher, mit einem Schwungrad und einer einen Rotor, einen Stator und ein Gehäuse beinhaltenden elektrischen synchronen Reluktanzmaschine, wobei der Rotor durch ein elektromagnetisch aktives Blechpaket gebildet ist.

Ein Schwungradspeicher ist ein mechanischer Leistungsspeicher, der ähnliche Eigenschaften wie elektrische Speicher, z.B. Kondensatoren oder sog. Supercaps hat. Im Gegensatz zu den elektrischen Speichern ermöglichen Schwungradspeicher bei gleicher Leistungsdichte eine höhere Energiedichte bezogen auf das Gesamtsystem. Außerdem haben Schwungradspeicher als mechanische Systeme eine höhere Zyklenfestigkeit und eine höhere zu erwartende Lebensdauer im Vergleich zu Kondensatoren oder Supercaps. Darüber hinaus bleiben bei Schwungradspeichern über die Lebensdauer der nutzbare Energieinhalt sowie die maximale Systemleistung konstant bei 100% des nominalen Werts.

Bei Verwendung eines Schwungradspeichers zur Energierückgewinnung bei einem Fahrzeug wird die elektrische Maschine des Schwungradspeichers über einen Umrichter, der für den Motor- und Generatorbetrieb der elektrischen Maschine geeignet ist, mit einem Gleichspannungszwischenkreis verbunden. Ein Steuergerät des Umrichters wird mit dem Steuersystem des Fahrzeugs verbunden, wodurch die Steuerung des Ablaufs von Lade- und Entladeprozess und der Austausch von Statusinformationen möglich sind.

Schwungradspeicher werden zur temporären mechanischen Energiespeicherung eingesetzt, indem ein Schwungrad mit relativ hoher Masse auf eine hohe Drehzahl beschleunigt und die Energie als Rotationsenergie zwischengespeichert wird. Die Energie wird zurückgewonnen, indem die Drehung des Schwungrads mit einem elektrischen Generator gekoppelt wird und dadurch abgebremst wird. Schwungradspeicher können insbesondere bei Fahrzeugen, die häufig stoppen und wieder anfahren, wie z.B. bei Bussen im städtischen Bereich oder Müllfahrzeugen oder dgl. zur Rückgewinnung der Bremsenergie verwendet werden. Durch den Einsatz derartiger Schwungradspeicher bei Fahrzeugen kann die Energiebilanz verbessert und der Treibstoffverbrauch gesenkt werden.

Neben dem Einsatz von Schwungradspeichern bei städtischen Bussen oder Müllfahrzeugen ist der Einsatz von Schwungradspeichern auch im Rennsport bekannt geworden.

Schwungradspeicher der gegenständlichen Art beinhalten das Schwungrad und eine elektrische Maschine, welche sowohl im Motorbetrieb als auch im Generatorbetrieb eingesetzt wird und dessen Rotor mit dem Schwungrad drehfest gekoppelt ist.

Beispielsweise beschreibt die DE 20 2011 108 033 U1 einen Schwungradspeicher, der beispielsweise bei Landmaschinen, Forstmaschinen oder kommunalen Nutzfahrzeugen eingesetzt werden kann. Zur Erzielung einer kompakten Bauweise des Schwungradspeichers dient der Rotor der elektrischen Maschine gleichzeitig als Schwungrad bzw. Schwungmasse. Nähere Details über den Aufbau des Schwungradspeichers werden jedoch in diesem Dokument nicht geoffenbart.

Aufgrund der Verwendung extrem hoher Drehzahlen, typisch über 30.000 U/min, und den relativ hohen Massen des Schwungrades treten sehr hohe Fliehkräfte auf, die zu einer Zerstörung des Schwungrades und zu einer Gefährdung der Umgebung führen können. Aus diesem Grund sind aufwändige und kostenintensive Maßnahmen erforderlich, den Schwungradspeicher entsprechend sicher zu gestalten. Beispielsweise wird um den Schwungradspeicher eine Umhüllung aus speziellen Materialien, beispielsweise faserverstärktem Kunststoff, beispielsweise Kevlar^{®}, angeordnet.

Die Aufgabe der vorliegenden Erfindung besteht in der Schaffung eines oben beschriebenen Schwungradspeichers, der möglichst kompakt und einfach aufgebaut ist und darüber hinaus möglichst sicher betrieben werden kann. Nachteile bekannter Schwungradspeicher sollen vermieden oder zumindest reduziert werden.

Gelöst wird die erfindungsgemäße Aufgabe dadurch, dass das Schwungrad durch ein an zumindest einer Seite des elektromagnetisch aktiven Blechpakets des Rotors der elektrischen synchronen Reluktanzmaschine innerhalb des Gehäuses angeordnetes elektromagnetisch passives Blechpaket gebildet ist. Es ist daher vorgesehen, dass das Schwungrad im Rotor der elektrischen Maschine integriert ist, indem das Schwungrad an zumindest einer Seite, vorzugsweise an beiden Seiten des Rotors angeordnet wird und wie der üblicherweise geblechte Rotor aufgebaut wird. Da das Schwungrad keinen elektromagnetisch aktiven Teil der elektrischen Maschine darstellt, wird es durch ein entsprechendes elektromagnetisch passives Blechpaket gebildet. Durch das Ausführen des Schwungrades in Form eines Blechpakets kann die Sicherheit erhöht werden, da die gesamte Masse des Schwungrades auf viele Bleche aufgeteilt wird mit jeweils geringerem Energieinhalt. Im Berstfall führt dies zu einer geringeren Belastung des den Schwungradspeicher umgebenden Gehäuses, da die einzelnen Bleche des elektromagnetisch passiven Blechpakets eine geringere kinetische Energie aufweisen. Durch die Integration des Schwungrades im Gehäuse der elektrischen Maschine wird eine kompakte Bauweise erzielt und somit weniger Platz beim Einbau in ein Fahrzeug benötigt. Die elektrische Maschine des Schwungradspeichers kann als Innen- oder Außenläufer ausgeführt werden. Die Verwendung einer elektrischen synchronen Reluktanzmaschine hat den Vorteil, dass der Rotor frei von Wicklungen oder Permanentmagneten sein kann. Gegenüber permanentmagneterregten Maschinen sind Reluktanzmaschinen aufgrund der geringeren Schleppverluste und des höheren Wirkungsgrads vorzuziehen. Bei der Anwendung eines solchen Schwungradspeichers in Fahrzeugen ist ein Energieeinsparungspotential bis zu 30% erzielbar.

Vorteilhafter Weise sind der Rotor der elektrischen synchronen Reluktanzmaschine und das Schwungrad wellenlos ausgebildet. Durch die wellenlose Ausführung des Rotors und des integrierten Schwungrades resultiert eine geringere mechanische Beanspruchung in den Blechen des elektromagnetisch aktiven Blechpakets des Rotors sowie des elektromagnetisch passiven Blechpakets des Schwungrades, da die Bleche keine mittige Öffnung für die Aufnahme einer Welle aufweisen. Statt einer zentralen Welle werden die Bleche des Rotors und die Bleche des Schwungrades über entsprechende Zugbolzen zusammengehalten. Durch die geringere mechanische Beanspruchung der rotierenden Teile kann eine höhere zulässige Drehzahl und ein höherer Energieinhalt des Schwungradspeichers realisiert werden.

Gemäß einer bevorzugten Ausführungsform der Erfindung ist das elektromagnetisch aktive Blechpaket des Rotors und das zumindest eine elektromagnetisch passive Blechpaket des Schwungrades sowie Endplatten mit integrierten Wellenstummeln mittels Zugbolzen verbunden, und sind die Wellenstummel in entsprechenden in Lagerschilden des Gehäuses enthaltenen Lagern gelagert. Durch eine derartige bevorzugte Variante wird einerseits ein kompakter Aufbau des Schwungradspeichers erzielt und andererseits die Lagerung des Rotors im Gehäuse erleichtert.

Das zumindest eine elektromagnetisch passive Blechpaket und allenfalls die Endplatten des Schwungrades können zumindest teilweise konturiert ausgebildet sein, indem das elektromagnetisch passive Blechpaket und allenfalls die Endplatten zumindest teilweise im Bereich der Zugbolzen maximalen Durchmesser aufweisen, und der Durchmesser zwischen den Zugbolzen reduziert ist. Vorzugsweise wird das zumindest eine elektromagnetisch passive Blechpaket und allenfalls die Endplatten des Schwungrades in einer solchen sog. Blütenblattkontur (d.h. einer Außenkontur in Form eines Blütenblattes) ausgebildet, wobei im Bereich der Zugbolzen eine gleichmäßige Materialanordnung der Bleche vorgesehen ist, was zu einer Vergleichmäßigung und Reduzierung der maximal auftretenden mechanischen Spannungen führt. Das elektromagnetisch aktive Blechpaket des Rotors der elektrischen Maschine des Schwungradspeichers ist aufgrund der Ausführung als elektrische synchrone Reluktanzmaschine mit einer entsprechenden Verzahnung ausgebildet. Die Zugbolzen müssen eine entsprechende Vorspannung aufweisen, sodass ein axialer Pressverband des elektromagnetisch passiven Blechpakets, der Endplatten und des elektromagnetisch aktiven Blechpakets des Rotors sichergestellt werden kann. Dabei ist die axiale Vorspannung der Zugbolzen so zu wählen, dass über den gesamten möglichen Temperatur- und Drehzahlbereich eine reibschlüssige Verbindung zwischen den einzelnen Blechen des elektromagnetisch passiven Blechpakets des Schwungrads und des elektromagnetisch aktiven Blechpakets des Rotors der elektrischen Maschine hergestellt wird.

Dabei können einzelne Bleche des zumindest einen elektromagnetisch passiven Blechpakets und allenfalls der Endplatten des Schwungrades auch mit kreisrundem Querschnitt ausgebildet sein. Auf diese Weise kann ein höherer Energieinhalt durch entsprechende Vergrößerung der Masse dieser Bleche erreicht werden oder für die Anordnung bestimmter Sensoren eine geeignete Oberfläche mit konstantem Abstand zum Stator der elektrischen Maschine sichergestellt werden. Derartige kreisrund ausgeführte Bleche sollten dabei aus einem Material mit einer höheren mechanischen Belastbarkeit bzw. Festigkeit hergestellt sein.

Wenn die Zugbolzen mit Muttern mit kreisrunder Außenkontur in den Endplatten fixiert werden, kann eine Fliehkraftabstützung gegenüber der Endplatte ermöglicht werden. Zur Betätigung der Muttern mit kreisrunder Außenkontur mit entsprechendem Werkzeug können geeignete Einbuchtungen oder dergleichen vorgesehen sein.

Wenn das elektromagnetisch aktive Blechpaket des Rotors und das zumindest eine elektromagnetisch passive Blechpaket des Schwungrades sowie die Endplatten mit einer Oberfläche mit hohem Emissionskoeffizient ausgeführt ist, vorzugsweise mit matt schwarzer Lackierung, kann eine Verbesserung der Wärmestrahlung und somit der Kühlung des Schwungradspeichers erzielt werden. Die Oberfläche mit hohem Emissionsgrad kann durch eine Lackierung besonders rasch und einfach hergestellt werden.

Insbesondere bei der Anwendung in einem Fahrzeug ist es von Vorteil, wenn der Rotor vertikal angeordnet ist. Durch eine vertikale Anordnung der Rotorachse können die wirksamen Kreiselmomente reduziert werden. Dadurch kann eine unerwünschte Beeinflussung der Fahrt des Fahrzeuges durch die bei Drehung des Schwungrades auftretenden Momente verhindert oder zumindest minimiert werden.

Bei der vertikalen Anordnung des Rotors ist es von Vorteil, wenn zusätzlich zu den üblicherweise durch Wälzlager realisierten Lagern zumindest ein passives Magnetlager angeordnet ist. Durch zumindest ein solches passives Magnetlager, welches durch entsprechend angeordnete Permanentmagnete beispielsweise in den Lagerschilden ausgebildet werden kann, wird eine entsprechende Anhebung des Rotors gegenüber der Schwerkraft und somit eine Entlastung der Lager, üblicherweise Wälzlager, erzielt. Dies verringert die Reibungsverluste der mechanischen Lager und erhöht somit deren Lebensdauer.

Das elektromagnetisch aktive Blechpaket des Rotors kann aus Kobalt oder einer Kobaltlegierung gebildet sein. Derartige Materialien weisen besonders hohe Magnetisierbarkeit und hohe Permeabilität und entsprechend hohe Festigkeit auf, sind allerdings gegenüber anderen Materialien von elektrischen Maschinen wesentlich teurer. Da der elektromagnetisch aktive Bereich des Rotors vom elektromagnetisch passiven Bereich des Rotors getrennt ausgeführt ist, müssen nicht alle Bleche des Schwungradspeichers aus derartigen teuren Materialien, sondern nur die den Rotor bildenden elektromagnetisch aktiven Bleche aus teureren Materialien ausgeführt sein.

Das zumindest eine elektromagnetisch passive Blechpaket des Schwungrades kann aus Stahl oder einer Stahllegierung gebildet sein. Neben dem niedrigeren Preis von Stahl oder einer Stahllegierung weisen derartige Materialien auch eine höhere Duktilität (das ist die Eigenschaft eines Werkstücks sich unter Belastung plastisch zu verformen bevor es versagt) auf als die spröderen Materialien des elektromagnetisch aktiven Blechpakets des Rotors. Durch die höhere Festigkeit des elektromagnetisch passiven Blechpakets des Schwungrades ist die Wahrscheinlichkeit eines Versagens des Materials beim Bersten eines Blechs des elektromagnetisch aktiven Blechpakets des Rotors unwahrscheinlich. Dadurch wird die Sicherheit des Schwungradspeichers entsprechend erhöht.

Für eine höhere Sicherheit gegen ein Bersten bei den auftretenden sehr hohen Drehzahlen ist es von Vorteil, wenn das zumindest eine elektromagnetisch passive Blechpaket und die Endplatten höhere mechanische Festigkeit aufweisen als das elektromagnetisch aktive Blechpaket. Wie bereits oben erwähnt, kann dies durch die Wahl entsprechender Materialien für die elektromagnetisch passiven Bleche und die Endplatten mit höherer Duktilität erzielt werden.

Das Gehäuse kann vakuumdicht ausgeführt sein und einen Anschluss für eine Vakuumpumpe aufweisen, sodass das Innere des Gehäuses evakuiert werden kann. Dadurch können die Reibungsverluste noch weiter reduziert werden. Aufgrund der Integration des Schwungrades im Rotor der elektrischen Maschine und die bevorzugte wellenlose Ausführung des Schwungradspeichers ist ein Abdichten des Gehäuses relativ leicht möglich und somit nur wenig Energie zum Betreiben der Vakuumpumpe und Aufrechterhalten des Vakuums bzw. Unterdrucks erforderlich.

Zur Kühlung des Schwungradspeichers können im Gehäuse Kühlkanäle zur Führung eines Kühlfluids angeordnet sein. Als Kühlfluid kommen sowohl geeignete Flüssigkeiten, insbesondere Wasser, als auch Gase zur Anwendung.

An der Innenseite des Gehäuses kann eine Energie absorbierende Schicht, vorzugsweise aus faserverstärktem Kunststoff oder Aluminiumschaum, angeordnet sein. Eine solche Energie absorbierende Schicht an der Innenseite des Gehäuses kann im Falle des Berstens des Schwungrades eine Verteilung der Energie bewirken und dadurch eine Zerstörung des Gehäuses verhindern. Je nach Ausführung der Energie absorbierenden Schicht kann das Gehäuse mit entsprechend verringerter Materialdicke und somit verringertem Gewicht hergestellt werden.

Wenn der Rotor der elektrischen synchronen Reluktanzmaschine vor der Montage thermisch und mechanisch vorkonditioniert ist, was durch kurzzeitige Anwendung sehr hoher Drehzahlen und sehr hoher Temperaturen geschehen kann (beispielsweise der 1,2-fachen maximalen Drehzahl und Temperaturen >100°C), wird die sog. Wuchtgüte beim Zusammenbau des Rotors erhöht. Durch das Durchfahren von mechanischen und thermischen Zyklen während einer solchen Vorkonditionierung wird axial eine entsprechende Spannung auf den Rotor aufgebracht, sodass am Ende des Prozesses eine Feinwuchtung des Rotors stattfinden kann, der auch über die Betriebszeit des Schwungradspeichers aufrecht gehalten werden kann.

Vorteilhafter Weise ist an zumindest einer geeigneten Stelle des Schwungradspeichers zumindest ein Temperatursensor vorgesehen. Derartige Temperatursensoren, welche verschiedenartig ausgebildet sein können, beispielsweise als temperaturempfindlicher Widerstand oder als Pyrometer, können Betriebszustände gemessen werden und im Falle der Überschreitung bestimmter Grenzwerte auch eine Zwangsabschaltungen des Schwungradspeichers eingeleitet werden.

Wenn zumindest ein Schwingungssensor vorgesehen ist, kann der Schwungradspeicher bei Auftreten unzulässig hoher Schwingungen abgeschaltet werden und somit eine Beschädigung oder Zerstörung des Schwungradspeichers verhindert werden.

Das Gehäuse des Schwungradspeichers kann über Federelemente an einem Rahmen aufgehängt sein, um eine Übertragung der Schwingungen des Schwungradspeichers auf das Fahrzeug zu verhindern oder zumindest zu minimieren. Im Gegensatz zu einer sehr aufwändigen kardanischen Aufhängung stellt die Realisierung über Federelemente eine einfache und kostengünstige Methode dar. Die Federelemente können durch Stahlseilfedern gebildet sein, die auch über entsprechende Stoßdämpfer optimiert werden können.

Die Erfindung wird anhand der beigefügten Zeichnungen näher erläutert. Darin zeigen:
Fig. 1 ein schematisches Schnittbild durch den Rotor eines erfindungsgemäßen Schwungradspeichers;
Fig. 2 eine schematische teilweise geschnittene Ansicht auf eine Ausführungsform eines Schwungradspeichers;
Fig. 3 einen Schnitt durch einen Teil des das Schwungrad bildende elektromagnetisch passive Blechpaket;
Fig. 4 einen Schnitt durch das elektromagnetische aktive Blechpaket; und
Fig. 5 eine Draufsicht auf eine Mutter zur Befestigung der Zugbolzen am Rotor des Schwungradspeichers.

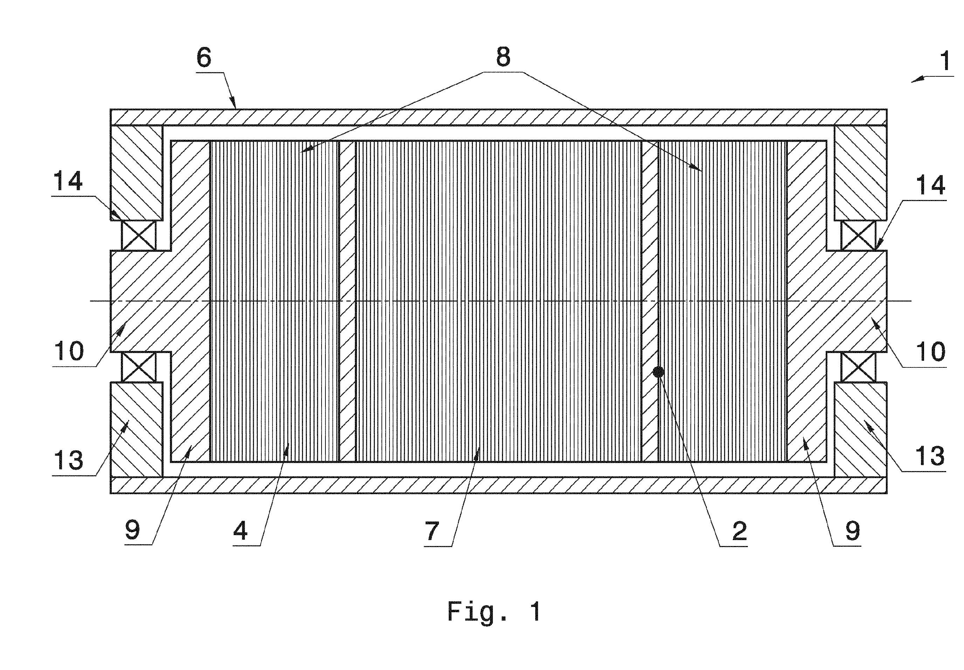

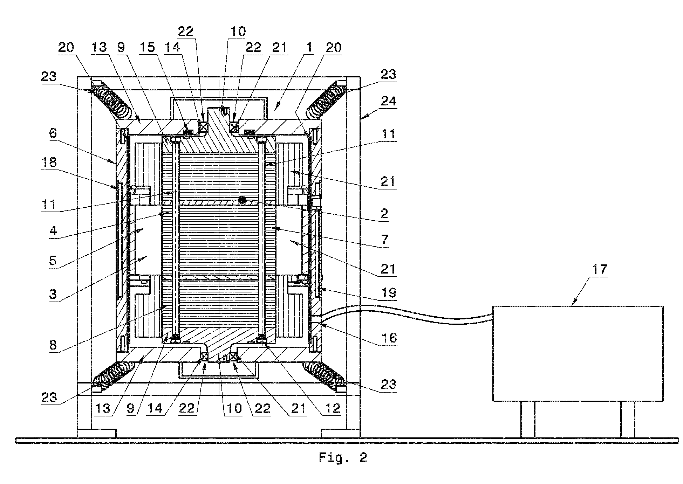

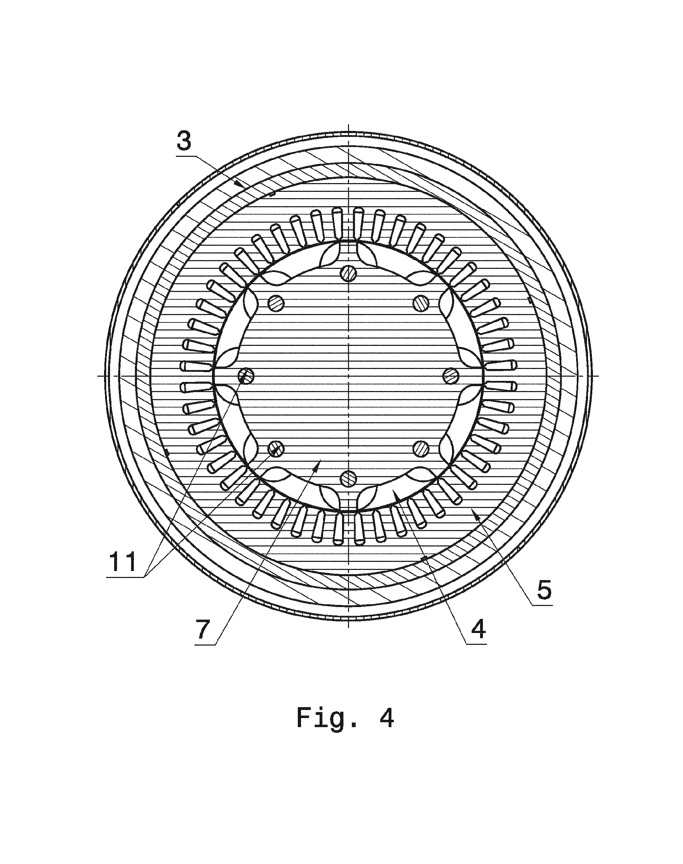

Fig. 1 zeigt ein Schnittbild durch den Rotor 4 eines erfindungsgemäß ausgebildeten Schwungradspeichers 1. Der Rotor 4 ist durch ein elektromagnetisch aktives Blechpaket 7 gebildet und das Schwungrad 2 durch zwei beiderseits des elektromagnetisch aktiven Blechpakets 7 angeordnete elektromagnetisch passive Blechpakete 8 gebildet. Demgemäß ist das Schwungrad 2 quasi im Rotor 4 des Schwungradspeichers 1 integriert und muss nicht über eine entsprechende Welle mit der elektrischen Maschine verbunden werden. Zusätzlich ist der Rotor 4 und das Schwungrad 2 wellenlos ausgebildet, indem das elektromagnetisch aktive Blechpaket 7 und die elektromagnetisch passiven Blechpakete 8 mit entsprechenden Zugbolzen 11 (siehe Fig. 2) verbunden sind. Am Ende der elektromagnetisch passiven Blechpakete 8 sind entsprechende Endplatten 9 mit integrierten Wellenstummeln 10 angeordnet. Die Wellenstummeln 10 an den Endplatten 9 werden in entsprechenden Lagern 14 in Lagerschilden 13 des Gehäuses 6 gelagert. Im Bereich des elektromagnetisch aktiven Blechpakets 7 des Rotors 4 ist der entsprechende Stator 5 der elektrischen Reluktanzmaschine 3 angeordnet, wie in Fig. 2 dargestellt ist. Die einzelnen Bleche des elektromagnetisch aktiven Blechpakets 7 des Rotors 4 sind entsprechend einer synchronen Reluktanzmaschine 3 mit entsprechend ausgeprägten Zähnen (siehe Fig. 4) ausgeführt. Die Teile des Schwungrades 2 sind ebenfalls aus einzelnen Blechen zusammengesetzt, sodass im Berstfall eine geringere Belastung des Gehäuses 6 resultiert, da die einzelnen Bleche der elektromagnetisch passiven Blechpakete 8 eine entsprechend geringere kinetische Energie aufweisen.

Das zumindest eine elektromagnetisch passive Blechpaket 8 des Schwungrades 2 und die Endplatten 9 haben vorzugsweise höhere mechanische Festigkeit als das elektromagnetisch aktive Blechpaket 7 des Rotors 4 des Schwungradspeichers 1. Beispielsweise bestehen die Bleche des elektromagnetisch aktiven Blechpakets 7 aus Kobalt oder Kobaltlegierungen und die Bleche des elektromagnetisch passiven Blechpakets 8 des Schwungrades 2 und allenfalls die Endplatten 9 aus Stahl oder einer Stahllegierung.

Die teilweise geschnittene Abbildung eines Schwungradspeichers 1 gemäß Fig. 2 zeigt weitere Details der Erfindung. Demgemäß sind die Bleche des elektromagnetisch aktiven Blechpakets 7 des Rotors 4 sowie die Bleche der elektromagnetisch passiven Blechpakete 8 des Schwungrades 2 und die Endplatten 9 mit Zugbolzen 11 und entsprechenden Muttern 12 fixiert. Die Wellenstummeln 10 der Endplatten 9 sind in entsprechenden Lagern 14 in Lagerschilden 13 des Gehäuses 6 gelagert. Bei den Lagern 14 handelt es sich üblicherweise um Wälzlager, die durch die Anordnung zusätzlicher passiver Magnetlager 15 unterstützt werden können. Bei der bevorzugten vertikalen Anordnung des Rotors 4 des Schwungradspeichers 1, die sich bei einer Anwendung in einem Fahrzeug aufgrund der Reduzierung der wirksamen Kreiselmomente besonders eignet, können die Permanentmagnete eines solchen passiven Magnetlagers 15 im Lagerschild 13 platziert werden, wodurch der Rotor 4 des Schwungradspeichers 1 gegen die Schwerkraft angehoben und die Lager 14 entlastet werden. Dadurch resultieren geringere Reibungsverluste und somit eine höhere Lebensdauer der Lager 14. Das elektromagnetisch aktive Blechpaket 7 des Rotors 4 und die elektromagnetisch passiven Blechpakete 8 des Schwungrades 2 sowie die Endplatten 9 sind vorzugsweise mit einer Oberfläche mit hohem Emissionskoeffizient ausgeführt, beispielsweise mattschwarz lackiert, um die Wärme über Wärmestrahlung besser abgeben zu können. Für eine zusätzliche Kühlung des Schwungradspeichers 1 können im Gehäuse 6 auch Kühlkanäle 18 zur Führung eines Kühlfluids 19, beispielsweise einer Kühlflüssigkeit oder eines Gases, angeordnet sein. Aufgrund der wellenlosen Ausführung des Rotors 4 und der Integration des Schwungrades 2 im Rotor 4 des Schwungradspeichers 1 kann das Gehäuse 6 relativ einfach gegenüber der Umgebung abgedichtet werden. Über einen entsprechenden Anschluss 16 kann eine Vakuumpumpe 17 angeschlossen werden, die im Inneren des Gehäuses 6 einen entsprechenden Unterdruck erzeugt, wodurch die auftretenden Reibungsverluste noch weiter verringert werden können.

An der Innenseite des Gehäuses 6 kann eine Energie absorbierende Schicht 20, beispielsweise aus faserverstärktem Kunststoff, Kevlar^{®} oder Aluminiumschaum, angeordnet sein, welche die Energie von Blechteilen im Falle eines Berstens des elektromagnetisch aktiven Blechpakets 7 bzw. der elektromagnetisch passiven Blechpakete 8 verteilt und eine Zerstörung des Gehäuses 6 verhindert.

An bestimmten Stellen des Schwungradspeichers 1 können Temperatursensoren 21 und Schwingungssensoren 22 angeordnet sein, welche den Betrieb des Schwungradspeichers 1 überwachen und beispielsweise bei Überschreitung bestimmter Grenzwerte eine Abschaltung bewirken können.

Insbesondere bei der Anwendung des Schwungradspeichers 1 in einem Fahrzeug, beispielsweise in einem Müllfahrzeug oder Linienbus, ist es von Vorteil, wenn das Gehäuse 6 des Schwungradspeichers 1 über Federelemente 23 an einem Rahmen 24 aufgehängt ist. Die Federelemente 23 können beispielsweise durch metallische Seilfedern gebildet sein.

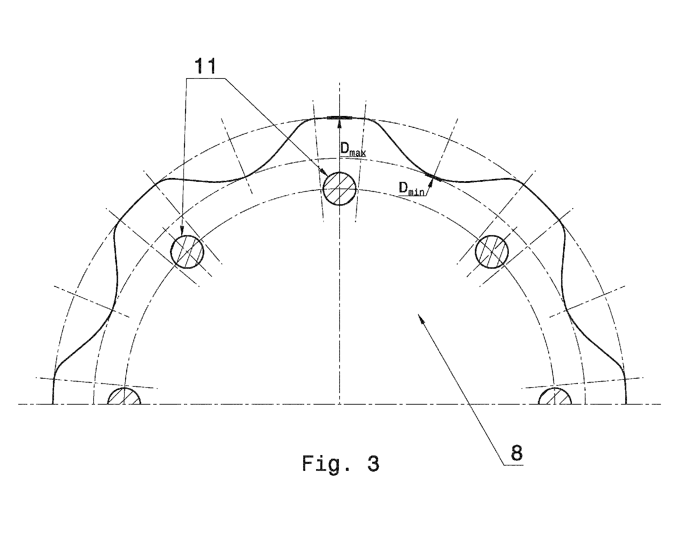

Fig. 3 zeigt einen Schnitt durch den halben Querschnitt eines Blechs des elektromagnetisch passiven Blechpakets 8 des Schwungrades 2, welches mit einer bestimmten Außenkontur (einer sog. Blütenblattkontur) ausgebildet ist, wobei das Blech im Bereich der Zugbolzen 11 maximalen Durchmesser D_{maz} aufweist und der Durchmesser zwischen den Zugbolzen 11 auf einem minimalen Durchmesser Dₘᵢₙ reduziert wird. Durch eine solche Außenkontur kann eine Vergleichmäßigung und Reduzierung der maximal auftretenden mechanischen Spannungen im Blech des elektromagnetisch passiven Blechpakets 8 erzielt werden. Natürlich können auch einzelne Bleche des elektromagnetisch passiven Blechpakets 8 mit einer kreisrunden Kontur ausgeführt werden, um einen höheren Energieinhalt zu erreichen oder um für Sensoren eine geeignete Oberfläche mit konstantem Abstand zum Stator 5 sicherzustellen (nicht dargestellt).

Fig. 4 zeigt ein Schnittbild durch das elektromagnetisch aktive Blechpaket 7 des Rotors 4 der elektrischen synchronen Reluktanzmaschine 3, welcher im Bereich der Zugbolzen 11 mit einer entsprechenden Zahnung ausgebildet ist. Im dargestellten Beispiel handelt es sich um eine acht-polige synchrone Reluktanzmaschine, welche durch entsprechende Ansteuerung der Statorwicklung im Stator 5 in Drehung versetzt werden kann.

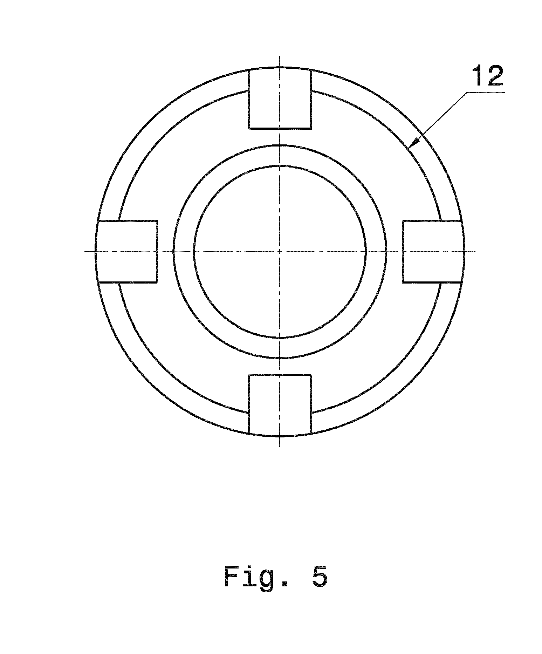

Schließlich zeigt Fig. 5 eine Draufsicht auf eine Mutter 12 zur Fixierung der Zugbolzen 11, welche mit einer kreisrunden Außenkontur ausgebildet ist, wodurch eine Fliehkraftabstützung gegenüber der Endplatte 9 ermöglicht wird. Zur Betätigung der Muttern 12 mit entsprechendem Werkzeug sind spezielle Vertiefungen oder dgl. angeordnet.

## Patentansprüche

1. Schwungradspeicher (1), mit einem Schwungrad (2) und einer einen Rotor (4), einen Stator (5) und ein Gehäuse (6) beinhaltenden elektrischen synchronen Reluktanzmaschine (3), wobei der Rotor (4) durch ein elektromagnetisch aktives Blechpaket (7) gebildet ist, **dadurch gekennzeichnet, dass** das Schwungrad (2) durch ein an zumindest einer Seite des elektromagnetisch aktiven Blechpakets (7) des Rotors (4) der elektrischen synchronen Reluktanzmaschine (3) innerhalb des Gehäuses (6) angeordnetes elektromagnetisch passives Blechpaket (8) gebildet ist.

2. Schwungradspeicher (1) nach Anspruch 1, **dadurch gekennzeichnet, dass** der Rotor (4) der elektrischen synchronen Reluktanzmaschine (3) und das Schwungrad (2) wellenlos ausgebildet sind.

3. Schwungradspeicher (1) nach Anspruch 2, **dadurch gekennzeichnet, dass** das elektromagnetisch aktive Blechpaket (7) des Rotors (4) und das zumindest eine elektromagnetisch passive Blechpaket (8) des Schwungrades (2) sowie Endplatten (9) mit integrierten Wellenstummeln (10) mittels Zugbolzen (11) verbunden sind, und die Wellenstummel (10) in entsprechenden in Lagerschilden (13) des Gehäuses (6) enthaltenen Lagern (14) gelagert sind.

4. Schwungradspeicher (1) nach Anspruch 3, **dadurch gekennzeichnet, dass** das zumindest eine elektromagnetisch passive Blechpaket (8) und allenfalls die Endplatten (9) des Schwungrades (2) zumindest teilweise konturiert ausgebildet sind, indem das elektromagnetisch passive Blechpaket (8) und allenfalls die Endplatten (9) zumindest teilweise im Bereich der Zugbolzen (9) maximalen Durchmesser (D_{maz}) aufweisen, und der Durchmesser (Dₘᵢₙ) zwischen den Zugbolzen (9) reduziert ist.

5. Schwungradspeicher (1) nach Anspruch 4, **dadurch gekennzeichnet, dass** einzelne Bleche des zumindest einen elektromagnetisch passiven Blechpakets (8) und allenfalls der Endplatten (9) des Schwungrades (2) mit kreisrundem Querschnitt ausgebildet sind.

6. Schwungradspeicher (1) nach einem der Ansprüche 3 bis 5, **dadurch gekennzeichnet, dass** das elektromagnetisch aktive Blechpaket (7) des Rotors (4) und das zumindest eine elektromagnetisch passive Blechpaket (8) des Schwungrades (2) sowie die Endplatten (9) mit einer Oberfläche mit hohem Emissionskoeffizient ausgeführt ist, vorzugsweise mit matt schwarzer Lackierung.

7. Schwungradspeicher (1) nach einem der Ansprüche 1 bis 6, **dadurch gekennzeichnet, dass** der Rotor (4) vertikal angeordnet ist.

8. Schwungradspeicher (1) nach einem der Ansprüche 3 bis 7, **dadurch gekennzeichnet, dass** zusätzlich zu den Lagern (14) zumindest ein passives Magnetlager (15) angeordnet ist.

9. Schwungradspeicher (1) nach einem der Ansprüche 3 bis 8, **dadurch gekennzeichnet, dass** das elektromagnetisch aktive Blechpaket (7) des Rotors (4) aus Kobalt oder einer Kobaltlegierung und das zumindest eine elektromagnetisch passive Blechpaket (8) des Schwungrades (2) aus Stahl oder einer Stahllegierung gebildet ist.

10. Schwungradspeicher (1) nach einem der Ansprüche 3 bis 9, **dadurch gekennzeichnet, dass** das zumindest eine elektromagnetisch passive Blechpaket (8) und die Endplatten (9) höhere mechanische Festigkeit aufweisen als das elektromagnetisch aktive Blechpaket (7).

11. Schwungradspeicher (1) nach einem der Ansprüche 1 bis 10, **dadurch gekennzeichnet, dass** das Gehäuse (6) vakuumdicht ausgeführt ist, und im Gehäuse (6) ein Anschluss (16) für eine Vakuumpumpe (17) vorgesehen ist.

12. Schwungradspeicher (1) nach einem der Ansprüche 1 bis 11, **dadurch gekennzeichnet, dass** im Gehäuse (6) Kühlkanäle (18) zur Führung eines Kühlfluids (19) angeordnet sind.

13. Schwungradspeicher (1) nach einem der Ansprüche 1 bis 12, **dadurch gekennzeichnet, dass** an der Innenseite des Gehäuses (6) eine Energie absorbierende Schicht (20), vorzugsweise aus faserverstärktem Kunststoff oder Aluminiumschaum angeordnet ist.

14. Schwungradspeicher (1) nach einem der Ansprüche 1 bis 13, **dadurch gekennzeichnet, dass** der Rotor (4) der elektrischen synchronen Reluktanzmaschine (3) thermisch und mechanisch vorkonditioniert ist.

15. Schwungradspeicher (1) nach einem der Ansprüche 1 bis 14, **dadurch gekennzeichnet, dass** das Gehäuse (6) über Federelemente (23) an einem Rahmen (24) aufgehängt ist.
